# EUROPEAN PATENT APPLICATION

(11) **EP 4 195 442 A1**
(43) Date of publication of application: **14.06.2023**
(21) Application number: 21212956.3
(22) Date of filing: 07.12.2021
(51) Int. Cl.: H02J 3/38, H02S 50/00

(54) **METHOD AND APPARATUS FOR INCREASING A PERFORMANCE OF A PHOTOVOLTAIC SYSTEM**

(71) Applicant: FRONIUS INTERNATIONAL GmbH, 4643 Pettenbach (AT)
(72) Inventor: DIEWALD, Nicole, 4643 Pettenbach (AT); OSTERMANN, Frank, 4643 Pettenbach (AT); HÜTTNER, Thomas, 4643 Pettenbach (AT); TAKAC, Kai, 4643 Pettenbach (AT)
(74) Representative: Isarpatent

(57) **Abstract**

A computer-implemented method for increasing a performance of a photovoltaic system, PV-SYS,(3), the method comprising the steps of processing (S1) performance relevant data received from heterogeneous data sources (4,5) to monitor a performance of said photovoltaic system, PV-SYS; comparing (S2) the monitored performance with a reference performance to detect a degradation of said photovoltaic system, PV-SYS,(3); processing (S3) the received performance relevant data to determine automatically a degradation root cause, DRC, of a detected degradation of said photovoltaic system, PV-SYS,(3); determining (S4) at least one recommendation, REC, to overcome the determined root cause, DRC, of the detected degradation of said photovoltaic system, PV-SYS,(3); and outputting (S5) the determined recommendation, REC, via a user interface (UI) to an operator of said photovoltaic system, PV-SYS,(3), and/or via a control interface to a controller of said photovoltaic system, PV-SYS,(3).

## Description

The invention relates to a computer-implemented method and apparatus for providing assistance in increasing a performance of a photovoltaic system and in locating errors within a photovoltaic system.

A photovoltaic system can comprise a plurality of photovoltaic modules which are adapted to convert solar radiation into electrical DC power. The generated DC power is supplied by the photovoltaic panel to an associated DC/AC converter, a so-called inverter, adapted to convert the DC power into electrical AC power. The AC output of the photovoltaic inverter can be applied to a power grid or used for power distribution to a customer structure, i.e. a residential, commercial or industrial or local power supply network. The inverter can comprise a controller configured to monitor and control photovoltaic modules and to communicate with other components of the photovoltaic system. A photovoltaic system can comprise several inverters each connected to an associated photovoltaic array. The photovoltaic array can comprise several strings each including serial connected photovoltaic modules. Each photovoltaic module comprises photovoltaic cells. A photovoltaic system can comprise several components which build up the system according to a system's configuration. The photovoltaic system can comprise different types of components such as different photovoltaic modules, different types of DC/DC converters and/or DC/AC converters. Depending on the configuration of the photovoltaic system and depending on environmental influences, the performance of a photovoltaic system can vary significantly. The performance of a photovoltaic system reflects the portion of the solar power received by the photovoltaic modules being transformed by the photovoltaic system into AC power. A photovoltaic system can also be connected to a power supply grid to exchange electrical power. Over time, the performance of an installed photovoltaic system can degrade. Typically, the degradation of the performance of a photovoltaic system is caused by aging of the electrical components of the photovoltaic system, dust forming on the surfaces of the photovoltaic panels or shading of the solar radiation, for instance by trees. Partial shading of photovoltaic panels can be caused by dust, snow, vegetation or buildings. Further, there can be degradations by component failures such as aging DC/DC converters or aging components of AC/DC power inverters. Also installation faults can lead to a degradation of a photovoltaic system such as an erroneous configuration of the photovoltaic panels or wiring. Moreover, seasonal influences or climate changes or special whether conditions such as hail storms can have an impact on the performance of a photovoltaic system. The momentary weather conditions have a high impact on the performance of a photovoltaic system. Typically, on cloudy days, the performance of a photovoltaic system is significantly reduced. Another factor influencing the performance of a photovoltaic system is the operation time of the photovoltaic system. Usually at night, the power generated by a photovoltaic system is almost reduced to zero, whereas under broad daylight the power generated by a photovoltaic system is quite high. Accordingly, there is a variety of different factors which can influence the performance of a photovoltaic system. An operator of a photovoltaic system strives to achieve a high performance of the operated photovoltaic system for a given infrastructure. In many scenarios, undetected performance degrading factors will lead to a loss of generated power.

Accordingly, it is an object of the present invention to provide a computer-implemented method for increasing a performance of a photovoltaic system by error and failure detection.

This object is achieved according to a first aspect of the present invention by a computer-implemented method for providing assistance in increasing a performance of a photovoltaic system.

The invention provides according to a first aspect a computer-implemented method for providing assistance in increasing a performance of a photovoltaic system, wherein the method comprises the steps of:
processing performance relevant data received from heterogeneous data sources to monitor a performance of the photovoltaic system,
comparing the monitored performance with a reference performance to detect a degradation of said photovoltaic system, processing the received performance relevant data to determine automatically a degradation root cause of a detected degradation of the photovoltaic system,
determining at least one recommendation to overcome the determined root cause of the detected degradation of the photovoltaic system and
outputting the determined recommendation via a user interface to an operator of the photovoltaic system and/or via a control interface to a controller of said photovoltaic system.

With the computer-implemented method according to the present invention, a benchmarking of a monitored performance of a photovoltaic system with a reference performance is performed. In this way, a degradation of performance of the monitored photovoltaic system can be detected at an early stage.

Moreover, in a preferred embodiment of the computer-implemented method according to the present invention does not only detect a degradation of the photovoltaic system but is also capable of determining a root cause for the detected degradation based on performance relevant data.

Furthermore, the computer-implemented method according to the present invention determines at least one recommendation to overcome a determined root cause output to an operator of the photovoltaic system or output to a controller of the photovoltaic system. Based on the recommendation, the performance of the photovoltaic system can be increased. The computer-implemented method according to the present invention makes use of a plurality of heterogeneous data sources to provide a holistic view on the monitored photovoltaic system.

The heterogeneous data sources can comprise internal data sources located at the monitored photovoltaic system and/or external data sources of service providers.

The performance relevant data provided by internal data sources located at the monitored photovoltaic system can comprise in a possible embodiment system configuration data including a configuration of system components of the monitored photovoltaic system and their connections and interfaces.

The configuration data relating to system components of the photovoltaic system can for instance indicate a type of the used photovoltaic panels and their current-voltage curve characteristica, type and characteristic of implemented DC/DC power converters, type characteristica of employed DC/AC converters, type and characteristic of implemented MPP trackers and e.g. also the wiring implemented between the different components of the photovoltaic system according to a wiring plan.

The performance relevant data provided by the internal data sources located at the monitored photovoltaic system can also include in a further possible embodiment of the computer-implemented method service messages and state codes generated by components of the photovoltaic systems over time, in particular service messages generated by controllers integrated in components of the photovoltaic system.

In a further possible embodiment of the computer-implemented method according to the first aspect of the present invention, the performance relevant data provided by the internal data sources located at the monitored photovoltaic system can also comprise flow data indicating a power generation of the monitored photovoltaic system.

In a still further possible embodiment of the computer-implemented method according to the first aspect of the present invention, the performance relevant data provided by data sources located at the monitored photovoltaic system can also comprise irradiation data indicating the solar radiation power at the location of the monitored photovoltaic system.

In a still further possible embodiment of the computer-implemented method according to the first aspect of the present invention, the performance relevant data provided by the internal data sources located at the monitored photovoltaic system can also comprise historic performance data related to a performance parameter of the monitored photovoltaic system observed during past observation time periods.

Besides the internal data sources, the computer-implemented method can also process performance relevant data from other heterogeneous data sources, in particular external data sources of service providers.

In a possible embodiment of the computer-implemented method according to the first aspect of the present invention, the performance relevant data provided by external data sources comprise environmental data indicating environmental conditions at the location of the monitored photovoltaic system over time. These environmental data can comprise weather data concerning the weather at the location of the monitored photovoltaic system, irradiation data indicating the solar power irradiating on the photovoltaic panels of the photovoltaic system, shading data and/or location data concerning the location of the monitored photovoltaic system.

In a further possible embodiment of the computer-implemented method according to the first aspect of the present invention, the performance relevant data provided by the external data sources can also comprise statistical data. This statistical data can include failure and/or error probabilities of system components implemented in the monitored photovoltaic system according to its configuration and/or climate zone data related to a climate zone where the monitored photovoltaic system is located.

In a possible embodiment of the computer-implemented method according to the first aspect of the present invention, the reference performance used to detect a degradation of the monitored photovoltaic system comprises a performance of a reference photovoltaic system.

In a possible embodiment of the computer-implemented method according to the first aspect of the present invention, the reference photovoltaic system is selected from a predefined group of photovoltaic systems.

The selection can for instance be performed by an operator of the monitored photovoltaic system of interest. A predefined group of selectable photovoltaic systems can include neighboring photovoltaic systems located within a predefined range of the geographic location of the monitored photovoltaic system.

A predefined group of selectable photovoltaic systems can also comprise a photovoltaic system having a similar or identical configuration as the monitored photovoltaic system.

Further, the predefined group of selectable photovoltaic systems can also comprise photovoltaic systems being exposed to similar environmental conditions as the monitored photovoltaic system.

In a further possible embodiment of the computer-implemented method according to the first aspect of the present invention, the reference performance used for comparison with the monitored performance of the investigated monitored photovoltaic system to detect a degradation of the monitored photovoltaic system can also comprise an average performance calculated from performances provided by a group of selected photovoltaic systems meeting specified criteria such as being in the vicinity to the geographic location of the monitored photovoltaic system, having a high configuration similarity with the configuration of the monitored photovoltaic system and/or a similarity with the environmental conditions to which the photovoltaic systems are exposed.

In a further possible embodiment of the computer-implemented method according to the first aspect of the present invention, the reference performance used for comparison with the monitored performance of the monitored photovoltaic system is provided by a simulator based on performance relevant data provided by the heterogeneous data sources, and based on a data model of the monitored photovoltaic system which can be derived from the configuration data of the monitored photovoltaic system. The simulator may be defined as a digital twin (during monitoring) or as a setpoint for performance after installation.

In a still further possible embodiment of the computer-implemented method according to the first aspect of the present invention, the reference performance can also comprise a historic performance of the monitored photovoltaic system in previous observation time periods derived from historic performance data related to the power generation by the monitored photovoltaic system within the previous observation time periods.

Accordingly, the momentary performance of the monitored photovoltaic system is compared in this case with the historic performance of the same photovoltaic system in previous observation time periods. This allows to observe trends in the performance of a monitored photovoltaic system over time.

In a still further possible embodiment of the computer-implemented method according to the first aspect of the present invention, the performance of the monitored photovoltaic system is compared with one or more reference performances in parallel or simultaneously to detect a degradation of the monitored photovoltaic system at an early stage of the degradation.

In a possible embodiment of the computer-implemented method according to the first aspect of the present invention, different kinds of degradations of a monitored photovoltaic system can be observed.

In a possible embodiment of the computer-implemented method according to the first aspect of the present invention, the detected degradation of a monitored photovoltaic system comprises a voltage degradation and/or power degradation of the monitored photovoltaic system.

In a further possible embodiment of the computer-implemented method according to the first aspect of the present invention, the detected degradation of the monitored photovoltaic system comprises a degradation with relation to one or more performance factors of the monitored photovoltaic system.

In a still further possible embodiment of the computer-implemented method according to the first aspect of the present invention, the internal data sources of the photovoltaic system are associated to different inverters of the monitored photovoltaic system to provide inverter specific performance relevant data of the monitored photovoltaic system.

In a still further possible embodiment of the computer-implemented method according to the first aspect of the present invention, a connection status of the different heterogeneous data sources is continuously monitored to assess a reliability of the determined recommendations.

In a further possible embodiment of the computer-implemented method according to the first aspect of the present invention, a degradation root cause is determined based on system data of the monitored photovoltaic system.

System data of the monitored photovoltaic system can be derived from system configuration data of the monitored photovoltaic system received from an external data source or loaded from a database and derived from component related data of system components of the photovoltaic system loaded from a system component library.

In a still further possible embodiment of the computer-implemented method according to the first aspect of the present invention, a mapping of the determined degradation root cause to one or more recommendations is performed based on data entries in a mapping table or look-up table stored in a database of a performance center server.

The invention provides according to a further aspect a performance center server including the features of claim 16.

The invention provides according to the second aspect a performance center cloud server comprising
a performance evaluation engine adapted to process data received from heterogeneous data sources to monitor a performance of a photovoltaic system and adapted to compare the monitored performance with a reference performance to detect
a degradation of the respective monitored photovoltaic system and comprising
a recommendation engine adapted to process the data received from the heterogeneous data sources and comparison results of the performance evaluation engine to determine a degradation root cause of the degradation of the respective photovoltaic system and adapted to determine at least one recommendation to overcome the determined degradation root cause of the detected degradation of the respective monitored photovoltaic system, wherein the determined recommendation is output by said recommendation engine via a user interface to an operator of the photovoltaic system and/or via a control interface to a controller of the respective photovoltaic system.

In the following, possible embodiments of the different aspects of the present invention are described in more detail with reference to the enclosed figures.
- Fig. 1: shows schematically a possible exemplary embodiment of a cloud-based performance center adapted to perform the computer-implemented method according to the first aspect of the present invention;
- Fig. 2: shows a flowchart for illustrating the main steps performed by a computer-implemented method according to the first aspect of the present invention;
- Fig. 3: shows schematically a cloud-based system for performing the computer-implemented method according to the first aspect of the present invention;
- Fig. 4: shows an exemplary implementation of a photovoltaic system.

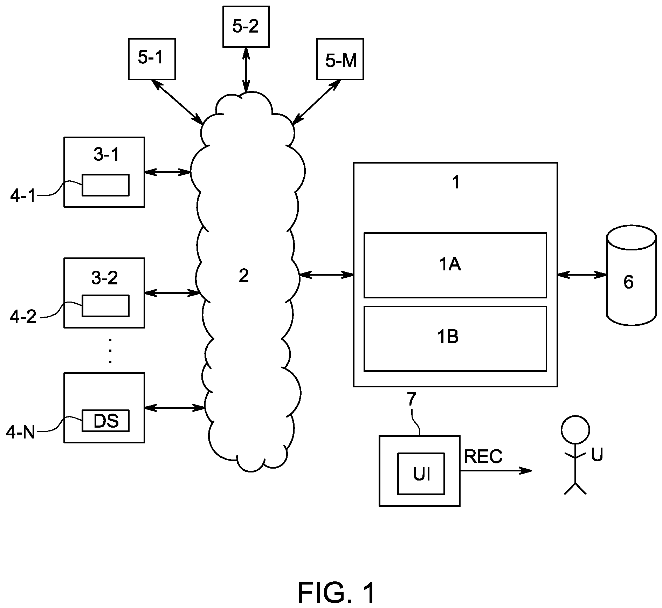

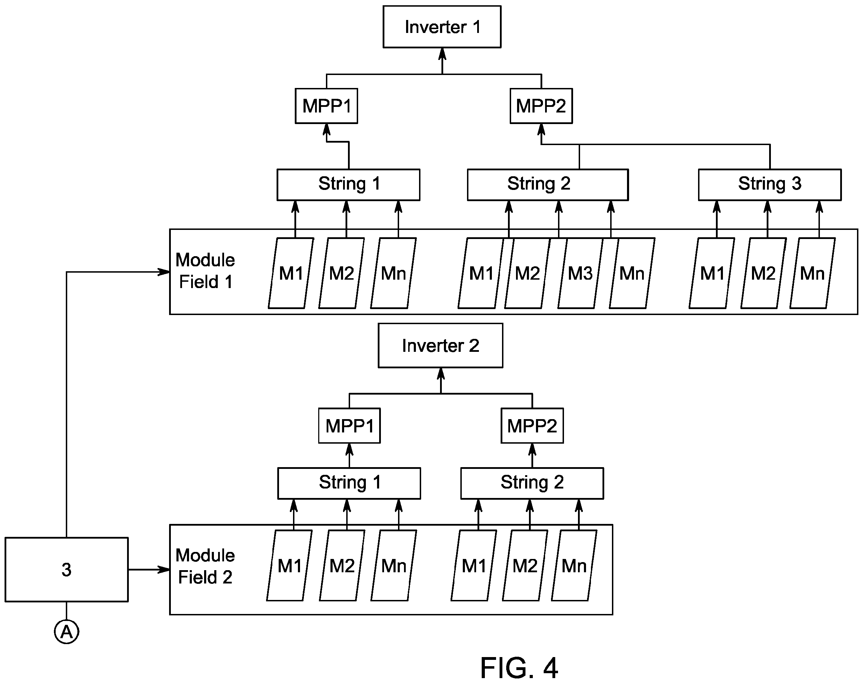

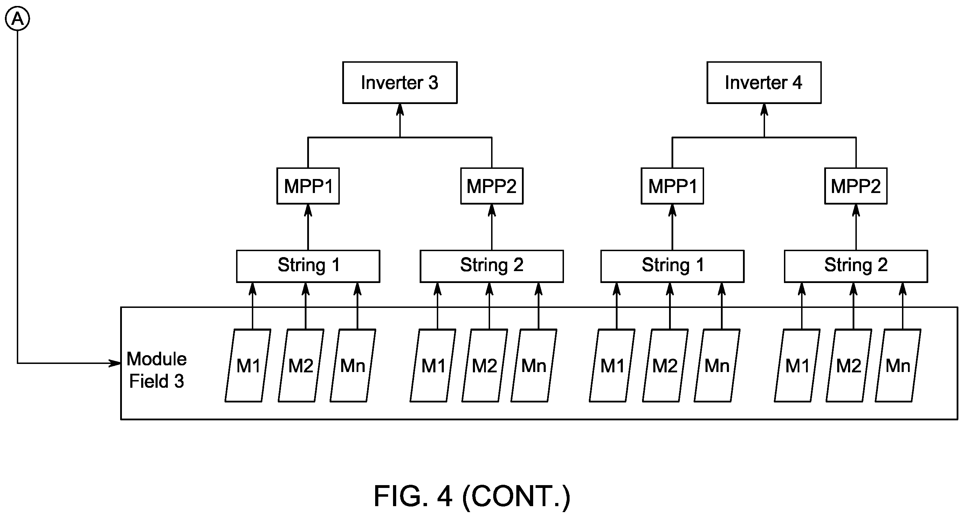

Fig. 1 shows schematically a cloud-based system adapted to perform a computer-implemented method for increasing a performance of a photovoltaic system according to the present invention. In a possible embodiment, the cloud-based system comprises a performance center cloud server 1 as illustrated schematically in Fig. 1 having a performance evaluation engine 1A and a recommendation engine 1B. The performance center cloud server 1 is connected via a cloud 2 forming a distributed data network to several photovoltaic systems 3-1, 3-2,...3-N as shown in Fig. 1. Each photovoltaic system can comprise its internal data sources 4-1, 4-2,... 4-N as shown schematically in Fig. 1. Besides the internal data sources, the cloud 2 can comprise external heterogeneous data sources 5-1, 5-2,...5-M as shown in Fig. 1. The performance center cloud server 1 can also have access to local databases 6 as illustrated in Fig. 1. The performance center cloud server 1 can be adapted to execute a computer-implemented method used to search root causes for underperformance. By addressing the found root causes a performance of a monitored photovoltaic system 3 can be increased. In a possible embodiment, the performance center cloud server 1 of the performance center can comprise a performance evaluation engine 1A and a recommendation engine 1B as shown schematically in Fig. 1. The performance evaluation engine 1A is adapted to process data received from heterogeneous data sources to monitor a performance of a specific photovoltaic system 3 on investigation and is further adapted to compare the monitored performance of the investigated photovoltaic system 3 with a reference performance to detect a degradation of the monitored investigated photovoltaic system 3. A photovoltaic system 3 can comprise a setup as illustrated in the example of Fig.4. The setup may comprise configurable and non-configurable components. A photovoltaic system 3 can comprise several module fields with photovoltaic modules M connected in series to form strings connected to an MPP tracker of an inverter. The number and types of inverters and of the module fields and of other components as well as the wiring between the components can vary depending on the use case. The individual configuration of the photovoltaic system 3 can be stored in a configuration database of the photovoltaic system 3. Also configuration changes performed at a photovoltaic system 3 stepwise over time can be stored as historic configuration data reflecting the performed changes. In this way an impact of a configuration change can be found as a possible root cause for a performance degradation or performance enhancement of the respective photovoltaic system 3.

The recommendation engine 1B of the performance center cloud server 1 is adapted to process data received from the heterogeneous data sources and comparison results received from the performance evaluation engine 1A to determine a degradation root cause DRC of a degradation of the respective monitored photovoltaic system 3 and is adapted to determine at least one recommendation REC to overcome the determined degradation root cause DRC of the detected degradation of the monitored photovoltaic system 3. The recommendation engine 1B is further adapted to output the determined recommendation REC via a user interface UI of a user equipment 7 to an operator or user U of the monitored photovoltaic system 3 as shown schematically in Fig. 1 and/or via a control interface to a controller of the respective photovoltaic system 3.

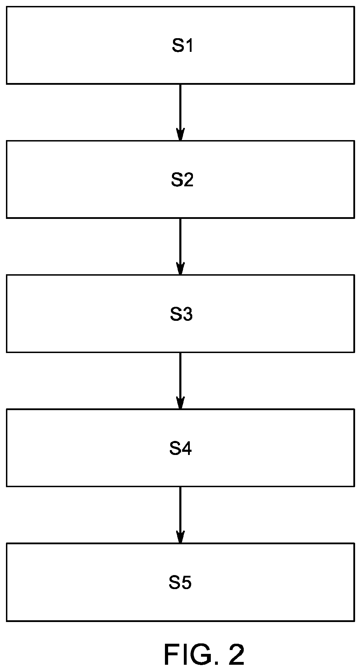

Fig. 2 shows a flowchart for illustrating the main steps performed by the computer-implemented method according to a first aspect of the present invention. In the illustrated exemplary embodiment, the computer-implemented method comprises five main steps S1 to S5 as illustrated in the flowchart of Fig. 2. The computer-implemented method as illustrated in Fig. 2 can be performed by a program executed by one or more processors of the performance center cloud server 1 as illustrated in the block diagram of Fig. 1.

In a first step S1, performance relevant data received from heterogeneous data sources can be processed to monitor a performance of an investigated monitored photovoltaic system 3. The investigated monitored photovoltaic system 3 can comprise one of the photovoltaic systems 3-1, 3-2 to 3-N as illustrated in Fig. 1. For instance, an operator or user of several photovoltaic systems 3 may choose to monitor the performance of the second photovoltaic system 3-2 as illustrated in Fig. 1.

In a further step S2, the monitored performance of the investigated photovoltaic system 3 is compared with a reference performance to detect a degradation of the monitored photovoltaic system 3 under investigation. The used reference performance can comprise a performance of a reference photovoltaic system 3 or a performance of multiple reference photovoltaic systems 3. Reference can also be a setpoint calculated based on irradiation data (Performance ratio calculation). A reference photovoltaic system 3 can in a possible embodiment be selected from a predefined group of photovoltaic systems 3 according to selection criteria. In a possible embodiment, the predefined group of photovoltaic systems 3 can include neighboring photovoltaic systems 3 located within a predefined range of the geographic location of the investigated photovoltaic system 3. Further, the predefined group of photovoltaic systems 3 can also comprise photovoltaic systems 3 having a similar or identical configuration as the investigated monitored photovoltaic system 3. Further, the predefined group of photovoltaic systems 3 can also comprise photovoltaic systems 3 being exposed to similar environmental conditions as the monitored photovoltaic system 3. Further, the predefined group of photovoltaic systems 3 can also comprise photovoltaic systems 3 having been installed by the same installer as the monitored photovoltaic system 3. For instance, a reference photovoltaic system 3 can comprise a photovoltaic system being close to the geographic position or coordinates of the investigated photovoltaic system 3 and/or having an identical configuration of system components as the investigated photovoltaic system 3 and being also exposed to similar environmental conditions as the investigated photovoltaic system 3. Accordingly, in step S2, a benchmarking with a reference performance is done to detect a possible degradation of the investigated photovoltaic system 3. As a reference performance, in a possible embodiment a performance of a reference photovoltaic system 3 can be used. In an alternative embodiment, the reference performance is provided or calculated by a simulator executed by the performance evaluation engine 1A of the performance center cloud server 1. The computation an be based on the performance relevant data provided by heterogeneous data sources and on the basis of a configuration data of the monitored photovoltaic system 3 derived from the system configuration data of the respective monitored photovoltaic system 3. An impact of intended configuration changes can be calculated by the simulator or by a trained artificial intelligence network of the performance center cloud server 1 to provide recommendations with respect to configuration changes to be performed at the investigated photovoltaic system 3.

In a further alternative embodiment, the reference performance used in the degradation detection in step S2 can also comprise a historic performance of the same monitored photovoltaic system 3 in previous observation time periods derived from historic performance data related to the power generation by the monitored photovoltaic system within the previous observation time periods. With the computer-implemented method as illustrated in the flowchart of Fig. 2, one or more reference performances can be used for the comparison of the monitored performance of the investigated photovoltaic system 3 to detect a possible degradation of the monitored photovoltaic system 3. Also currents and voltages can be used for comparison. Accordingly a benchmarking with one or more reference performances can be performed simultaneously, i.e. in parallel.

After having detected a degradation of the photovoltaic system 3 in step S2, a root cause detection is performed in step S3. In step S3, the performance relevant data received from the heterogeneous data sources can be processed to determine automatically a degradation root cause DRC of the detected degradation of the investigated photovoltaic system 3. In step S3, a root cause analysis algorithm is performed to detect the original cause for the observed degradation. The observed degradation can comprise a degradation with relation to a predefined key performance indicator or performance factor. In a possible embodiment, the degradation root cause DRC can be determined based on a system data model of the monitored photovoltaic system 3 under investigation. This system model can be derived in a possible implementation from system configuration data of the monitored photovoltaic system 3 received from an external data source or loaded from a database 6 of the cloud system. The system data model can further be derived from component related data of system components of the photovoltaic system 3 loaded from a system component library stored in a database 6. The system components of the investigated photovoltaic modules can comprise different analog or digital hardware components and also implemented software modules. The hardware components can for instance comprise photovoltaic panels, the implemented DC/DC inverters, the inverters of the photovoltaic system 3 as well as components used for wiring other components of the photovoltaic system 3. For each system component of the photovoltaic system 3, corresponding datasets can be stored in a system component library. Based on the datasets of the system components, a system data model of the investigated monitored photovoltaic system 3 can be created using also the configuration data of the respective photovoltaic system 3 indicating the assembly and interconnection between the different system components of the respective photovoltaic system 3. The generated system data model of the photovoltaic system 3 can be stored in a database 6 to perform a degradation root cause analysis for the respective photovoltaic system 3. The result of the root cause detection analysis is the determination of a specific degradation root cause DRC for the degradation of the photovoltaic system 3 detected in step S2.

In a further step S4, at least one recommendation REC to overcome the determined root cause DRC of the detected degradation of the photovoltaic system 3 is determined. The at least one recommendation can be determined by the recommendation engine 1B of the performance center cloud server 1 illustrated in Fig. 1. In a possible embodiment, a mapping of the determined degradation root cause DRC to one or more recommendations REC can be performed in step S4 based on the data entries of a mapping table MT stored in a database 6 of the performance center cloud server 1. In a possible embodiment, for each possible degradation root cause DRC one or more recommendations REC are stored in a look-up table MT and can be processed to retrieve recommendations for a determined degradation root cause. The calculated recommendation REC can also be enriched based on performance relevant data received from the heterogeneous data sources and based on comparison results. The recommendation service provided by the recommendation engine comprises an algorithm that derives a call to action based on calculated key performance indicators as well as based on data from external data sources (AIs) including recommendation tables.

The system can be triggered in a possible embodiment by different periodically performed calculations:
- Inverter level energy comparison: Trend analysis of the daily specific yield values of each inverter in the PV system 3. Interpretation directly as alert for unusual deviations between inverters as well as a trigger for further analysis (degradation calculation).
- Neighborhood comparison: Classification of PV systems 3 based on their geographic location and configuration (at least orientation, tilt angle). Analysis of historic performance data of the previously classified PV systems to detect PV systems 3 that are under-performing compared to other, comparable PV systems 3 in the geographic proximity. Interpretation directly as an alert for under-performance of the PV system 3 as well as a trigger for further analysis.

- Performance ratio: Calculate current performance ratio as a comparison of the specific yield (kWh/kWp) of the PV system 3 compared to a set point based on irradiation data. The achieved performance ratio is then compared to a threshold based on geographic and climatic values. Interpretation directly as an alert "PC low" as well as a trigger for further analysis (degradation calculation).

In a further step S5, the determined recommendation REC can be output by the recommendation engine 1B of the performance center cloud server 1 via the cloud 2 to a user interface or a customer interface UI of an operator U of the investigated photovoltaic system 3 and/or via a control interface to a controller of the monitored photovoltaic system 3. In response to the recommendation REC received by the controller of the monitored photovoltaic system 3, in a possible embodiment, manual actuators provided at the respective photovoltaic system 3 can be activated and adjusted by the user U to increase the performance of the monitored photovoltaic system 3 according to the output recommendation REC. In a possible embodiment some actuators can be also controlled directly in response to recommendations received by the controller. For instance, in a possible embodiment, a position and/or orientation and/or a tilt angle of photovoltaic modules or panels of the monitored photovoltaic system 3 can be changed automatically in response to the recommendation REC received via a control interface from the recommendation engine 1B of the performance center cloud server 1. Further, in a possible implementation, the surfaces of the photovoltaic modules of the monitored photovoltaic system 3 can be cleaned manually by cleaning actuators handled by a user U in response to cleaning recommendations REC output via a display of a user interface UI to the user U or by cleaning actuators controlled directly in response to recommendations REC received by the actuators from the recommendation engine 1B via the cloud 2 .

The cloud-based system as illustrated schematically in Fig. 1 can comprise a plurality of different heterogeneous data sources providing performance relevant data which can be processed by the performance evaluation engine 1A and/or by the recommendation engine 1B of the performance center cloud server 1. The heterogeneous data sources can comprise internal data sources 4-i as illustrated schematically in Fig. 1 and/or external data sources 5-i as illustrated in Fig. 1. Further, one or more databases 6 can be used by the performance center cloud server 1 to perform performance evaluations and/or to calculate recommendations.

The internal data sources 4-i of the photovoltaic systems 3 can for instance comprise system configuration data indicating a configuration of different system components of the photovoltaic system 3-i. The system configuration data can be loaded in a possible embodiment from a database of the system of the respective photovoltaic system 3-i. In a possible embodiment, the system configuration data of different photovoltaic systems 3-i can be stored in a local database 6 of the performance center server 1. The system configuration data indicates the structure and topography of the photovoltaic system 3 and the interconnection between the plurality of different system components. Further, the system configuration data can comprise data concerning local configuration of configurable system components such as system hardware components and/or system software modules. The system configuration data can additionally be stored in a local memory of the respective photovoltaic system 3-i.

The performance relevant data provided by internal data sources 4-i of the photovoltaic systems 3 can also comprise service messages SM and/or state codes SC generated by components of the monitored photovoltaic system 3 during observation time periods.

Further, the performance relevant data provided by the internal data sources 4-i of photovoltaic systems 3 can comprise flow data indicating a power generation and/or performance of the monitored photovoltaic systems 3 as time series data. The data may be processed in a possible embodiment as aggregated 5-minute values. Further, the performance relevant data provided by the data sources of the photovoltaic systems 3-i can comprise irradiation data indicating a solar radiation at the geographic location of the monitored photovoltaic system 3-i. In case that irradiation sensors are installed at the location of the respective photovoltaic systems 3-1 the irradiation data can originate from internal data sources. Since in many use cases such irradiation sensors are not available at the location of the photovoltaic system 3-i the irradiation data is mostly provided from external data sources 5-i.

The performance relevant data provided by internal data sources 4-i of the photovoltaic system 3-i can comprise historic performance data related to a performance of a monitored photovoltaic system 3-i during observation time periods in the past.

Besides the internal data sources 4-i, the cloud-based system can also comprise external data sources 5-i as illustrated schematically in Fig. 1. The performance relevant data provided by the external data sources 5-i can comprise for instance environmental data indicating environmental conditions at the location of the monitored photovoltaic system 3 over time. The environmental data can comprise in particular weather data and/or solar irradiation data of solar radiation hitting the photovoltaic modules of the photovoltaic system 3. Moreover, the environmental data can also comprise location specific data. The external data sources 5-i can also provide statistical data including failure and/or error probabilities of system components implemented in the respective photovoltaic system 3. The statistical data can also comprise failure or error one or more dimensional probability distributions. The statistical data provided by the external data sources 5-i can also comprise climate zone data related to the climate zone where the monitored photovoltaic system 3 is located.

The performance center cloud server 1 can process a plurality of different performance relevant data to provide a holistic view on the investigated photovoltaic system 3-i.

In a possible embodiment of the computer-implemented method according to the present invention, also the availability and/or connection status of the different heterogeneous data sources 4-i, 5-i is continuously monitored by the performance center cloud server 1 to assess or estimate a reliability and accuracy of the recommendations determined by the recommendation engine 1B. In a further possible embodiment, the internal data sources 4-i of the photovoltaic system 3 can be associated to different inverters of the monitored photovoltaic system 3 to provide inverter specific performance relevant data of the monitored photovoltaic system 3.

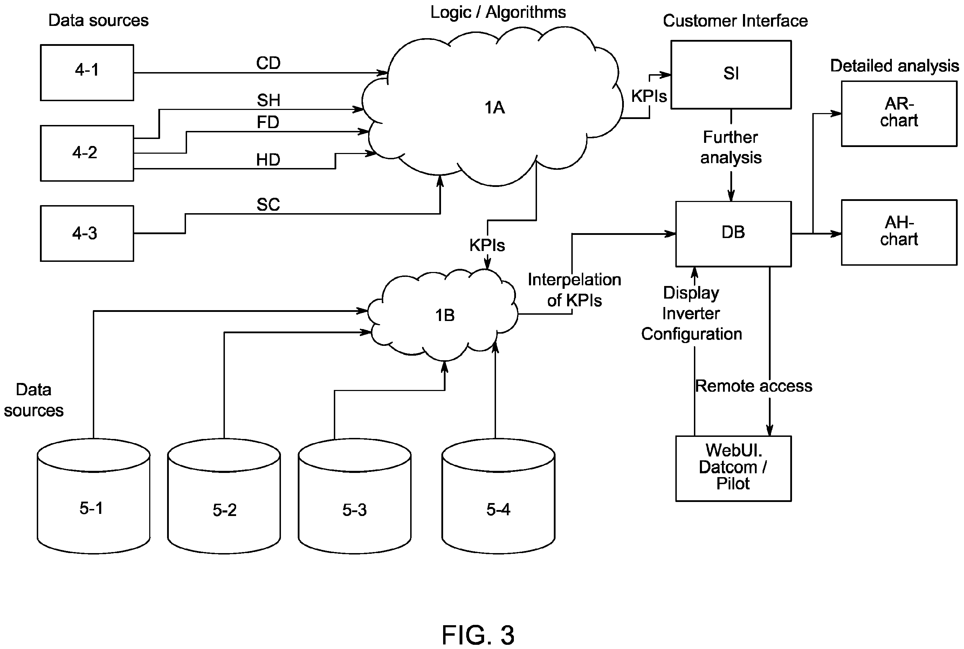

Fig. 3 shows schematically a cloud-based system for performing the computer-implemented method for providing assistance for increasing a performance of a monitored photovoltaic system 3. The cloud server 1 illustrated schematically in Fig. 1 can provide different kinds of services to a user or operator of an investigated photovoltaic system 3. The performance evaluation engine 1A of the performance center cloud server 1 is adapted to provide a performance evaluation service to a user or operator of at least one photovoltaic system 3-i. Besides the performance evaluation service, the cloud server 1 is also adapted to provide an additional recommendation service for handling root causes having caused a degradation of a performance of an investigated photovoltaic system 3. The performance evaluation service can be provided by a performance evaluation engine 1A and the recommendation service can be provided by a recommendation engine 1B integrated in the same server 1 as illustrated schematically in Fig. 1. However, in an alternative embodiment, the performance evaluation service can be provided by a performance evaluation engine 1A being separated from a recommendation engine 1B within the cloud 2. In this embodiment, the performance evaluation engine 1A and the recommendation engine 1B communicate via a data network or cloud 2 as illustrated in Fig. 1. In a possible embodiment, the performance evaluation engine 1A performs steps S1, S2 of the computer-implemented method as illustrated in the flowchart of Fig. 2, whereas the recommendation engine 1B performs steps S3, S4, S5 of the illustrated flowchart. To provide the performance evaluation service, the performance evaluation engine 1A is adapted to receive a plurality of performance relevant data from heterogeneous data sources such as a "solar.creator" and "solar.web" . In the illustrated embodiment of Fig. 3, the performance evaluation engine 1A receives performance relevant data from the external data sources 4-1, 4-2, 4-3. The data source 4-1 provides configuration data CD of the investigated photovoltaic system 3. The system configuration data CD can indicate a configuration of system components of the monitored photovoltaic system 3.

The performance evaluation engine 1A further receives from a second data source 4-2 "solar.web" different data streams. The external data source 4-2 can provide service messages SM and/or state codes SC generated by components of the photovoltaic system 3. In the illustrated embodiment, the external data source 4-2 can further provide historic performance data related to a performance of the monitored photovoltaic system 3 observed during previous observation time periods in the past. The third external data source 4-3 performed by a state code software tool can provide interpretations of state codes SC of components of an investigated photovoltaic system 3.The state codes can be provided by inverters or data loggers of the photovoltaic systems 3-i. As illustrated in Fig. 3, the system configuration data CD, the service messages SM, the flow data FD, the historic data HD as well as the interpretations of the state codes SC are supplied into the cloud 2 and to a performance evaluation engine 1A to provide a performance evaluation service. The data sources 4-1, 4-2, 4-3 include a plurality of internal data sources provided in a predefined group of photovoltaic systems 3-1 to 3-N. Besides the internal data sources 4-i, external data sources 5-i can be provided. In the illustrated embodiment, a first data source 5-1 is adapted to provide statistical data concerning error probabilities of common errors of predefined system components. A further external data source can comprise weather data concerning the local weather at the geographical location of the investigated photovoltaic system 3. A further database 5-3 can provide climate zone data related to a climate zone where the investigated monitored photovoltaic system 3 is located. This data can also comprise Köppen-Geiger classification data using the Köppen-Geiger classification concerning climate zones. Moreover, the external data sources 5-i can comprise data relating to a partial shading 5-4 of photovoltaic modules of an investigated photovoltaic system 3. The external data sources 5-i can provide environmental data indicating environmental conditions at the location of a monitored photovoltaic system 3 over time. These environmental data can comprise weather data read from the data source or database 5-2. Statistical data can be derived from the statistical database such as data source 5-1. The statistical data can include failure and/or error probabilities of system components of photovoltaic systems 3. These statistical data can also indicate failures and error probabilities of system components in relations to other measurable data such as temperature data or humidity data. Another data source for statistical data is the database 5-3 providing climate zone data in relation to a climate zone where the photovoltaic system 3 can be implemented.

The performance center cloud server 1 can comprise a performance evaluation engine 1A adapted to perform different kinds of performance evaluation services and/or a recommendation engine 1B adapted to perform a recommendation service. In a possible implementation, the performance evaluation engine 1A is adapted to perform a neighborhood comparison service. This neighborhood comparison service includes screening and monitoring of key performance indicators KPIs in relation to reference photovoltaic systems located within a geographic proximity of the investigated photovoltaic system 3-i. One or more selected photovoltaic systems 3-i can be compared with each other with reference to their individual performance. For instance, in a possible embodiment, a group of photovoltaic systems 3 within the vicinity of an investigated photovoltaic system 3 are selected automatically or manually by an operator of the different photovoltaic systems 3 to calculate average reference performance benchmarks or key performance indicators KPIs which are used for performing a comparison with the corresponding monitored performance indicators of the investigated photovoltaic system 3-i. If, for instance, there are several photovoltaic systems 3 with an identical or similar configuration in the vicinity of an investigated photovoltaic system 3, the performance evaluation engine 1A can calculate average performance indicators on the basis of the data received from the data sources in relation to the reference photovoltaic systems 3 being located in the vicinity of the investigated photovoltaic system 3-i. The performance generated by the investigated photovoltaic system 3-i is then compared in a possible embodiment to the calculated average value for the other similar photovoltaic systems 3 in its vicinity to detect a possible degradation or underperformance of the investigated photovoltaic system 3. In this embodiment, the reference performance is provided by the calculated average performance of other photovoltaic systems 3 located in a predefined range around the geographic location of the investigated photovoltaic system 3. It is also possible to use a weighted average performance or a performance provided by machine learning. Moreover, in a possible embodiment, the performance of an investigated photovoltaic system 3 within a predefined observation time period is compared with a reference performance calculated on the basis of historic data HD concerning the performance of the same photovoltaic system 3 over a predefined observation time period in the past. The comparison result can be evaluated to determine long-term trends within the performance of an investigated photovoltaic system 3. The processing of the data can comprise machine learning methods. The calculation can be based on linear regression. In a possible embodiment, the performance evaluation engine 1A of the performance center server 1 can take into account one or more reference performances calculated on different databases. For instance, the evaluation engine 1A can take into account a relative performance of the investigated photovoltaic system 3 in relation to other similar photovoltaic systems 3 in its vicinity and also a relative performance of the investigated monitored photovoltaic system 3 at an observation time in relation to a performance provided by the same photovoltaic system 3 over a past observation time period. In a possible embodiment, the performance center cloud server 1 is able to monitor a fleet of photovoltaic systems 3 of the same operating entity. The photovoltaic system 3 is able to monitor and manage an entire photovoltaic system fleet which can be commissioned in "solar.web" and monitored in "solar.web" or Solar.web Business. When monitoring a plurality of photovoltaic systems 3 within a predefined group of photovoltaic systems 3, the performance center server 1 provides for the detection and interpretation of errors or degradations within the different photovoltaic systems 3 at the different locations.

In the illustrated embodiment of Fig. 3, the design software tool "solar.creator" allows an individual configuration of a photovoltaic system 3, wherein this configuration data CD can be considered for neighborhood comparison and/or for root cause analysis. The configuration generated by the design tool "solar.creator" can be synchronized with the performance center cloud server 1. The recommendation engine 1B of the performance center 1 offers in a possible embodiment an interpretation of health and performance key performance indicators KPIs based on the performance relevant data provided by the different data sources. The performance center 1 can interpret common errors (FLD files), weather data, location data and also partial shading detection data provided at the different data sources 5-i. In this way, it is possible to interpret key performance indicators KPIs without single-string monitoring (I-V curve diagnosis).

As illustrated in Fig. 3, the interpretation of the key performance indicators (KPIs) can in a possible embodiment be supplied by the recommendation engine 1B providing the recommendation service and also to a photovoltaic system 3 detail dashboard DB of a customer interface. Further, the key performance indicators provided by the performance evaluation engine 1B can be supplied to a photovoltaic system status interface SI of the customer interface as illustrated in Fig. 3. A detailed analysis can be performed on the basis of adapted real time charts AR-chart and/or adapted history charts AH-chartconcerning performance data of the investigated photovoltaic systems 3.

The performance center cloud server 1 can provide a general overview of the interdependencies of several components within the investigated photovoltaic system 3. The performance center cloud server 1 is adapted to calculate different kinds of key performance indicators KPIs based on the data provided by heterogeneous internal or external data sources. In a possible embodiment, the key performance indicators KPIs can also be displayed to various touchpoints and evaluated to derive recommendations RECs for actions to be performed manually by a user or performed automatically by controllers at the investigated photovoltaic system 3. In a possible embodiment, the recommendation engine 1B can also comprise a machine learning module. This machine learning module can be used in a possible embodiment for a so-called RISO analysis performed by an inverter and/or to perform a voltage and power analysis in relation to the investigated photovoltaic system 3. In a possible embodiment of the cloud-based system, a connection status can be monitored as a key performance indicator KPI. For instance, the connection status can indicate a percentage of online data sources and/or online status of inverters available to the performance center cloud server 1. It may also indicate the number of available data sources within the different photovoltaic systems 3. The different available data sources of the photovoltaic systems 3 can be displayed in a possible embodiment via a graphical user interface of a customer. In this way, a customer has the possibility to see how many of the available data sources are online and can provide data to the performance center cloud server 1. Further, log data values can be processed to form a basis for reports provided to a customer such as an operator of a photovoltaic system 3. A customer can see in this way which data sources are unreliable and can take measures accordingly.

In a neighborhood comparison procedure, a daily curve of kilowatt hour produced by the respective photovoltaic system 3 can be measured and displayed to a customer. In a possible embodiment, the overall photovoltaic system performance can compare the power at the DC side of an inverter to the power at its AC/DC side. In a possible embodiment, a customer can receive a comparison of a selected photovoltaic system 3 under investigation with average photovoltaic systems of the same area to determine how the investigated photovoltaic system 3 performs over time. A customer or user can also select specific photovoltaic systems 3 as reference systems for comparison with the performance of the investigated photovoltaic system 3.

In a further possible embodiment, the performance center 1 allows for an inverter energy comparison. In this embodiment, the produced power is investigated and displayed on an inverter level. The electrical power output by an inverter can be displayed on a screen of the customer interface. In this way, it is possible to compare the performance of different inverters within the same photovoltaic system 3. In this way, a customer can see at a glance which strings (MPP level) within the investigated photovoltaic system 3 have performed best within the observed time period in comparison to other strings of the same photovoltaic system 3. In this way, a customer can also recognize easily a long-term degradation on MPP level. A deviation between inverters can be displayed.

A further key performance indicator KPI provided by the performance center 1 can comprise a performance of a photovoltaic system 3 compared to a setpoint based on a measured solar irradiation. In this way, a customer can be informed about the performance of the investigated photovoltaic system 3 compared to an expected performance based on the solar irradiation at the corresponding location. In this way, the customer can determine whether the investigated photovoltaic system 3 is over-performing or under-performing taking into account the solar radiation at the location of the photovoltaic system 3. The performance ratio of an investigated photovoltaic system 3 can be evaluated and displayed in a regular time interval, e.g. a 15 min time interval, daily or for other observation time periods such as months, years or user-defined time frames.

A further source of information is formed by service messages SM generated by components of the photovoltaic system 3. The service messages SM generated by components can be archived for a predefined time period which depends on the photovoltaic system. The logged service messages SM can in a possible embodiment be preprocessed by classifying the different service messages SM. In a possible embodiment, the service messages SM can be displayed to a customer via a customer interface. In a possible embodiment, the customer has the possibility to sort the service messages SM according to predefined criteria for instance chronologically by a classified severity and/or by a state code SC and/or according to the corresponding inverter within the investigated photovoltaic system 3. A pattern recognition is performed on the basis of the service messages SM.

The performance center cloud server 1 can in a possible embodiment also perform a long-term degradation analysis. For instance, in a possible embodiment, the performance evaluation engine 1A is adapted to detect a degradation of the insulation resistance of the photovoltaic system 3 which may cause later start-ups of the photovoltaic system 3 and may cause a shutdown of the photovoltaic system 3 on rainy days thus affecting the performance of the respective photovoltaic system 3. Further other failures caused for instance by bad cable connections or by broken cables can be detected.

In a further possible embodiment, the performance center cloud server 1 can also detect a long-term degradation by performing a voltage analysis. An interpretation of the voltage and/or performance degradation can be performed. For instance, a customer can be informed by means of the customer interface about a long-term degradation of the performance and voltage of an investigated photovoltaic system 3 and can also get an interpretation or recommendation of a requested action. The recommendation can for instance comprise a hint that a photovoltaic module of the photovoltaic system 3 might be shaded or dirty or PID suspicious. In a further long-term investigation, the performance center cloud server 1 may calculate a trend of the investigated photovoltaic system 3 in comparison with other reference photovoltaic systems. In a possible embodiment, a customer can see via its customer interface how the investigated photovoltaic system 3 is performing on the long run when compared to the average similar photovoltaic system 3 in its geographic proximity.

In a preferred embodiment, the performance center 1 provides a real time view of one or more selected key performance indicators KPIs. The real time values can be calculated event-driven, for instance when the user opens a specific view via a graphical user interface of its customer interface.

The output time series values can be in a possible embodiment inverter specific values of inverters within the investigated photovoltaic system 3. In a possible implementation, a serial number or another identifier of the respective inverter within the investigated photovoltaic system 3 can be displayed via a screen of the customer interface. Different data sources of the investigated photovoltaic system 3 as well as inverters can be sortable and may be filtered by using specific filters adjusted by the customer interface. In this way, it is clearly visible to a customer or user which inverter belongs to which data source. Additionally, a total power or a power per MPP can be displayed to a user via a customer interface of the cloud-based system as illustrated in Fig. 3.

The computer-implemented method according to the present invention allows to specify different photovoltaic systems 3 in geographic proximity that can be compared with each other and can track their specific yield on a module field level. The mapping of module fields and inverters can be performed to provide comparability of different values. Based on that, photovoltaic module fields can be compared with each other based on their specific yield (kWh/kWp). For performing a comparison, in a possible embodiment three different types of photovoltaic systems or photovoltaic module fields can be distinguished. These types comprise a photovoltaic system 3, i.e. a photovoltaic system in the neighborhood of an investigated photovoltaic system to perform a comparison of the measured key performance indicators KPIs. Further, the photovoltaic systems can comprise so-called considered photovoltaic systems, i.e. all photovoltaic systems that are qualified for a comparison solely based on their geographic location and configuration (orientation , tilt angle etc.). Further, the photovoltaic system 3 can also comprise selectable photovoltaic systems from a subset of the considered photovoltaic systems where a specific account of a user has access rights on. From the considered photovoltaic systems, only average values can be displayed to the customers via the customer interface among the selectable photovoltaic systems 3. A customer or user can be able to freely select several reference photovoltaic systems for the benchmark comparison and may save favorites among them.

The cloud-based system as illustrated in Fig. 1 can also calculate a performance ratio as a basis for performance guarantee reports. A performance guarantee report can support an installer of the photovoltaic system 3 in offering performance guarantees. These performance guarantees can for instance guarantee a certain yield that the respective photovoltaic system 3 is required to generate and possibly supply to a connected public power supply grid or for self-consumption. The value can be calculated in a possible embodiment in different time periods, for instance each day or each month or year.

In a possible embodiment, the photovoltaic system 3 can be configured by defining a structure or topology of the respective photovoltaic system 3 and by indicating the types of the used photovoltaic components. In a possible embodiment, a photovoltaic system 3 can consist of a predefined number of photovoltaic module fields. Each photovoltaic field can comprise a predefined number of photovoltaic modules which are collected to strings. These strings can itself be connected with MPP trackers of an inverter. Each inverter of the photovoltaic system 3 can comprise one to a predefined maximum number of MPP trackers depending on the inverter model. For performance guarantee reports, an STC (Standard Test Conditions) performance ratio can be calculated according to IEC61724-1.

The performance center 1 can also be used to perform a voltage and power analysis. In a possible implementation, an adequate filtering method is employed so that the analysis result gets less dependent on environmental influences, in particular weather conditions. In a possible embodiment, a subroutine can be performed which is adapted to detect the local weather conditions based on local available data provided by local sensors or local inverters. This can be important if an access to remote databases providing weather data is not possible. For instance, weather clouds passing over a photovoltaic system 3 can cause a variation of the generated electrical power over time so that a corresponding signal reflecting the power variation can be generated. For instance, if the amplitude of the generated signal is varying over time, a frequency of the variations can be determined or calculated. This frequency reflects the clouds passing over the investigated photovoltaic system 3. For instance, if a cloud is passing over the photovoltaic modules of the investigated photovoltaic system 3, every minute there is a power generation variation within the detected signal reflecting this passage rate of the clouds. The power measurements of the inverter reflect the passage of the clouds. The amplitude of the measured power of the photovoltaic system 3 is reduced from a high power amplitude to a low power production amplitude whenever a sun-shading cloud is passing over the photovoltaic array of the respective photovoltaic system. In this way, it is possible to perform a clear sky detection to classify if the rate of the sun-shading clouds is low, e.g. when the frequency of the amplitude changes is low. In this implementation, the frequency of the detected weather clouds passing over the photovoltaic system 3 can form a further performance relevant data source which can be taken into account by the performance evaluation engine 1A of the performance center cloud server 1.

The recommendation engine 1B can be adapted to perform a recommendation service, i.e. provide recommendations for performing possible actions in relation to components of the investigated photovoltaic system 3. Recommendations RECs can be displayed on a screen of the customer interface so that an operator or user can perform necessary actions to increase the performance of the photovoltaic system 3. Further, recommendations RECs can also comprise control flags and/or control signals supplied via the cloud 2 to one or more controllers of the investigated photovoltaic system 3 to trigger directly or indirectly adjustments at system components of the investigated photovoltaic system 3 which are suitable to increase the performance of the investigated photovoltaic system 3 in view of the performance evaluation and/or detected root causes DRCs.

The performance center 1 can generate automatically alerts which are displayed on a screen of the customer interface in case that specific parameters or calculated key performance indicators KPIs require immediate action at the investigated photovoltaic system 3. The customer interface as illustrated in Fig. 3 can be provided by a web-based application or can be integrated in a portable user equipment carried by a user or operator of a photovoltaic system 3 or a photovoltaic system fleet.

## Claims

1. A computer-implemented method for increasing a performance of a photovoltaic system, PV-SYS,(3),
the method comprising the steps of:
- processing (S1) performance relevant data received from heterogeneous data sources (4,5) to monitor a performance of said photovoltaic system, PV-SYS;
- comparing (S2) the monitored performance with a reference performance to detect a degradation of said photovoltaic system, PV-SYS,(3);
- processing (S3) the received performance relevant data to determine automatically a degradation root cause, DRC, of a detected degradation of said photovoltaic system, PV-SYS,(3);
- determining (S4) at least one recommendation, REC, to overcome the determined root cause, DRC, of the detected degradation of said photovoltaic system, PV-SYS, (3); and
- outputting (S5) the determined recommendation, REC, via a user interface (UI) to an operator of said photovoltaic system, PV-SYS,(3), and/or via a control interface to a controller of said photovoltaic system, PV-SYS, (3).

2. The computer-implemented method according to claim 1
wherein the heterogeneous data sources (4, 5) comprise internal data sources (4) located at the monitored photovoltaic system, PV-SYS,(3) and/or
external data sources (5) of data providers.

3. The computer-implemented method according to claim 1 or 2 wherein the performance relevant data provided by internal data sources (4) located at the monitored photovoltaic system, PV-SYS, (3) comprise
- system configuration data CD indicating a configuration of system components of the monitored photovoltaic system, PV-SYS,(3);
- service messages, SM, and state codes, SC, generated by system components of the monitored photovoltaic system, PV-SYS,(3) over time ;
- flow data, FD, indicating a power generation and/or performance of the monitored photovoltaic system, PV-SYS, (3) ;
- historic performance data HD related to a performance of the monitored photovoltaic system, PV-SYS,(3) during observation time periods in the past.

4. The computer-implemented method according to any of the preceding claims 1 to 3 wherein the performance related data provided by the external data sources (5) comprise
- environmental data indicating environmental conditions at the location of the monitored photovoltaic system, PV-SYS,(3) over time, in particular weather data and irradiation data and/or location data;
- statistical data including failure and/or error probabilities of system components;
- climate zone data related to a climate zone where the monitored photovoltaic system, PV-SYS,(3) is located and
- irradiation data indicating a solar radiation at the location of the monitored photovoltaic system, PV-SYS, (3) .

5. The computer-implemented method according to any of the preceding claims 1 to 4 wherein the reference performance comprises a performance of a reference photovoltaic system, PV-SYS.

6. The computer-implemented method according to claim 5 wherein the reference photovoltaic system, PV-SYS,is selected from a predefined group of photovoltaic systems, PV-SYS, including neighboring photovoltaic systems, PV-SYS, located within a predefined range of the geographic location of the monitored photovoltaic system, PV-SYS,(3) and/or comprising a similar or identical system configuration as the monitored photovoltaic system, PV-SYS,(3) and/or being exposed to similar environmental conditions as the monitored photovoltaic system, PV-SYS,(3).

7. The computer-implemented method according to claim 5 wherein the reference performance comprises a historic performance of the monitored photovoltaic system, PV-SYS, (3) in previous observation time periods derived from historic performance relevant data related to the power generation and/or performance of the monitored photovoltaic system, PV-SYS, (3) within previous observation time periods.

8. The computer-implemented method according to any of the preceding claims 1 to 7 wherein the detected degradation of the monitored photovoltaic system, PV-SYS,(3) comprises a voltage degradation of the monitored photovoltaic system, PV-SYS, (3) and/or a performance or power degradation of the monitored photovoltaic system, PV-SYS, (3) and/or an insulation resistance degradation of a PV array.

9. The computer-implemented method according to any of the preceding claims wherein the internal data sources (4) are associated to different inverters of the monitored photovoltaic system, PV-SYS,(3) and provide inverter specific performance relevant data of the monitored photovoltaic system, PV-SYS,(3).

10. The computer-implemented method according to any of the preceding claims 1 to 9 wherein an availability and/or connection status of the different heterogeneous data sources (4,5) is continuously monitored to assess a reliability and/or accuracy of the determined recommendations,RECs.

11. The computer-implemented method according to any of the preceding claims 1 to 10 wherein a response to a recommendation, REC, received by a controller of the monitored photovoltaic system, PV-SYS, (3) actuators provided at the photovoltaic system, PV-SYS,(3) are activated directly or indirectly by a user to increase the performance of the monitored photovoltaic system, PV-SYS,(3).

12. The computer-implemented method according to claim 11 wherein a position and/or an orientation and/or a tilt angle of photovoltaic modules of the monitored photovoltaic system, PV-SYS,(3) are changed and/or wherein surfaces of photovoltaic modules of the monitored photovoltaic system, PV-SYS, (3) are cleaned and/or wherein inverters of the monitored photovoltaic system, PV-SYS, (3) are controlled to increase automatically the performance of the monitored photovoltaic system, PV-SYS,(3) in response to the received recommendation, REC.

13. The computer-implemented method according to any of the preceding claims 1 to 12 wherein a degradation root cause, DRC, is determined based on a system data model of the monitored photovoltaic system, PV-SYS,(3) derived from system configuration data of the monitored photovoltaic system, PV-SYS,(3) received from an external data source (5)or loaded from a database (6) and derived from component related data of system components of said photovoltaic system, PV-SYS, (3) loaded from a system component library.

14. The computer-implemented method according to any of the preceding claims 1 to 13 wherein a mapping of the determined degradation root cause, DRC, to one or more recommendations, REC, is performed based on a mapping table stored in a database (6) of a performance center server (1) .

15. The computer-implemented method according to claim 9 wherein the inverter specific performance relevant data of the monitored photovoltaic system, PV-SYS,(3) is processed to compare the performance of different inverters within the respective photovoltaic system, PV-SYS,(3) with each other.

16. A performance center cloud server comprising:
- a performance evaluation engine (1A) adapted to process data received from heterogeneous data sources (4,5) to monitor a performance of a photovoltaic system, PV-SYS,(3) and adapted to compare the monitored performance with a reference performance to detect a degradation of the respective monitored photovoltaic system, PV-SYS, (3); and comprising
- a recommendation engine (1B) adapted to process the data received from the heterogeneous data sources (4,5) and comparison results received from the performance evaluation engine (1A) to determine a degradation root cause, DRC, of the degradation of the respective monitored photovoltaic system, PV-SYS, (3)and adapted to determine at least one recommendation, REC, to overcome the determined degradation root cause, DRC, of the detected degradation of the respective monitored photovoltaic system, PV-SYS,(3) wherein the determined recommendation, REC, is output by said recommendation engine (1B) via a user interface to a user or operator of said monitored photovoltaic system, PV-SYS,(3) and/or via a control interface to a controller of the respective monitored photovoltaic system, PV-SYS, (3).
